# EUROPEAN PATENT APPLICATION

(11) **EP 2 665 067 A2**
(43) Date of publication of application: **20.11.2013**
(21) Application number: 13167939.1
(22) Date of filing: 15.05.2013
(51) Int. Cl.: G21C 15/00, G21C 15/18, G21D 1/02

(54) **Heat transfer systems and methods for nuclear plants**

(30) Priority: 16.05.2012 US 201213472724
(71) Applicant: GE-Hitachi Nuclear Energy Americas LLC, Wilmington, NC 28401 (US)
(72) Inventor: Ayer, Robert, Wilmington NC North Carolina 28401 (US); Ginsberg, Robert Joseph, Wilmington NC North Carolina 28401 (US); Bass, John Robert, Wilmington NC North Carolina 28401 (US)
(74) Representative: Williams, Andrew Richard

(57) **Abstract**

A heat transfer system (400) for a nuclear plant may include a piping system (418) that includes first and second connectors (414, 416), heat exchanger (406), pump (402), and power source (420). The heat transfer system (400) may not be connected to the plant during normal power operations. The power source (420) may be independent of a normal electrical power distribution system for the plant and may be configured to power the pump (402). The piping system (418) may be configured to connect the heat exchanger (406) and pump (402). The connectors (414, 416) may be configured to connect the heat transfer system (400) to a fluid system (500, 600) of the plant. When the connectors connect the heat transfer system (400) to the fluid system, the heat transfer system (400) may be configured to receive fluid from the fluid system (500, 600) of the plant via the first connector (414), to pump the fluid through the heat exchanger (406), and to return the fluid to the fluid system (500, 600) via the second connector (416).

## Description

### BACKGROUND

### Field

Example embodiments generally relate to nuclear plants. Example embodiments also relate to heat transfer systems and methods for nuclear plants including Boiling Water Reactor ("BWR") nuclear plants, Heavy Water Reactor ("HWR") nuclear plants, Liquid-Metal Fast-Breeder Reactor ("LMFBR") nuclear plants, Supercritical Water Reactor ("SCWR") nuclear plants, and other nuclear plants that have, for example, spent fuel pools. The heat transfer systems and methods may be particularly beneficial in the event of plant emergency or other abnormal conditions that may cause normal plant electrical power to be disrupted or otherwise impair or prevent normal cooling of, for example, a spent fuel pool and/or a suppression pool. The heat transfer systems and methods also may be used to supplement the functions of a related art fuel pool cooling ("FPC") system, a related art residual heat removal ("RHR") system, and/or other similar systems whose nomenclature and precise functions may depend on the specific type and/or manufacture(s) of the nuclear plant.

### Description of Related Art

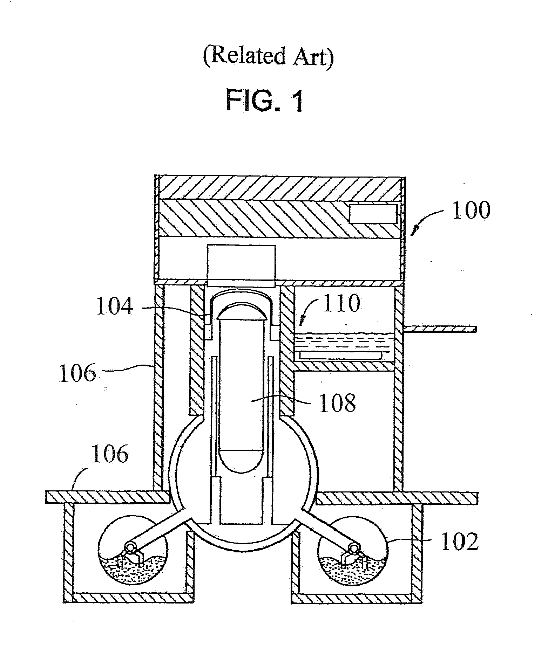

FIG. 1 is a cut-away view of a related art BWR reactor building 100. Suppression pool 102 may be a torus-shaped pool that is part of the reactor building primary containment. Suppression pool 102 may be an extension of steel primary containment vessel 104, located within shell 106 of reactor building 100. Suppression pool 102 may be positioned below reactor 108 and spent fuel pool 110, and may limit containment pressure increases during certain accidents. In particular, suppression pool 102 may be used to cool and condense steam released during plant accidents. For instance, many plant safety/relief valves may be designed to discharge steam into suppression pool 102 to condense the steam and/or mitigate undesired pressure increases. Typically, suppression pool 102 may be approximately 140 feet in total diameter (i.e., plot plan diameter), with a 30 foot diameter torus-shaped shell. During normal operation, suppression pool 102 may contain suppression pool water at a depth of about 15 feet (with approximately 1,000,000 gallons of suppression pool water in suppression pool 102 during normal operation). Related art FPC systems, related art RHR systems, and/or other similar systems whose nomenclature and precise functions may depend on the specific type and/or manufacture(s) of the nuclear plant would be known to a person having ordinary skill in the art ("PHOSITA").

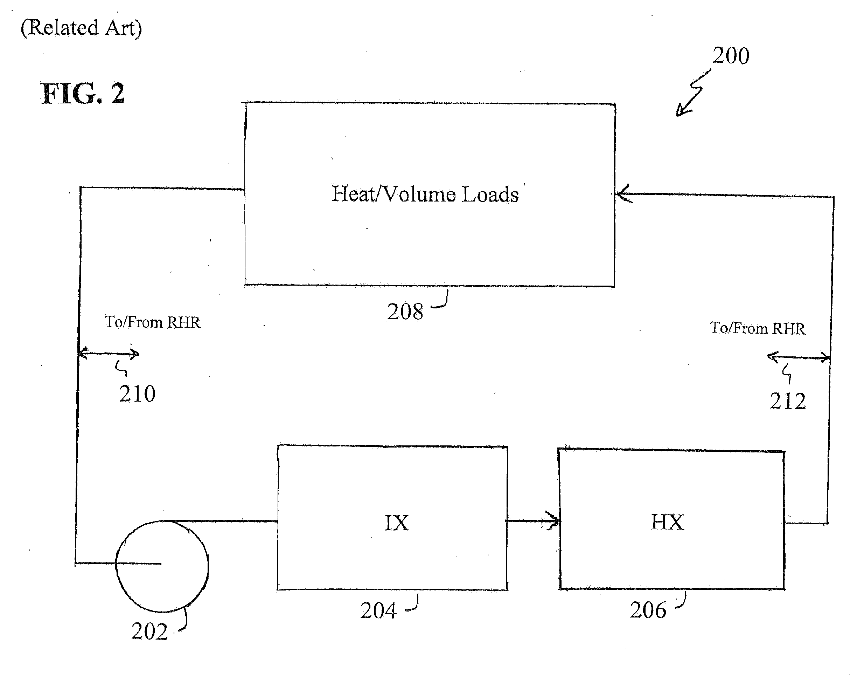

FIG. 2 is a simplified drawing of related art FPC system 200. Related art FPC system 200 may include, for example, one or more FPC pumps 202, one or more FPC demineralizers/ion exchangers 204, one or more FPC heat exchangers 206, and/or one or more FPC heat/volume loads 208. FPC heat/volume loads 208 may include, for example, one or more of a spent fuel pool (not shown), a wet well (not shown), a dryer-separator pool, and a suppression pool (not shown). Some of FPC heat/volume loads 208 may involve cooling by related art FPC system 200, some of FPC heat/volume loads 208 may involve movement of volumes of water by related art FPC system 200, and some of FPC heat/volume loads 208 may involve both.

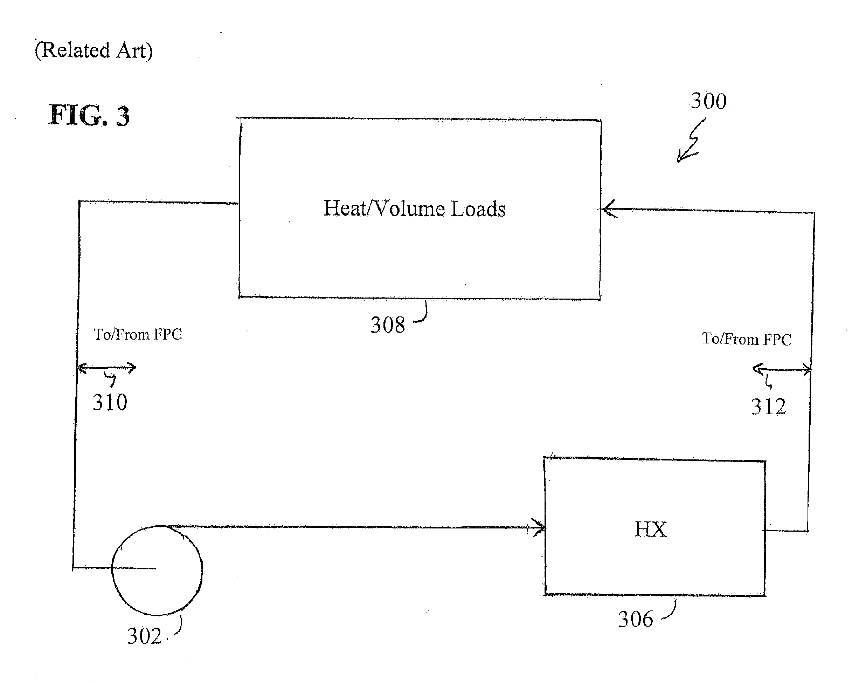

FIG. 3 is a simplified drawing of related art RHR system 300. Related art RHR system 300 may include, for example, one or more RHR pumps 302, one or more RHR heat exchangers 306, and/or one or more RHR heat/volume loads 308. RHR heat/volume loads 308 may include, for example, one or more of a reactor pressure vessel (not shown), a wet well (not shown), a dry well (not shown), a suppression pool (not shown), and a spent fuel pool (not shown). Some of RHR heat/volume loads 308 may involve cooling by related art RHR system 300, some of RHR heat/volume loads 308 may involve movement of volumes of water by related art RHR system 300, and some of RHR heat/volume loads 308 may involve both.

Related art FPC system 200 may include one or more cross-connectors to and/or from related art RHR system 300. As shown in FIG. 2, related art FPC system 200 may include, for example, cross-connector 210 and/or cross-connector 212. As shown in FIG. 3, related art RHR system 300 may include, for example, cross-connector 310 and/or cross-connector 312. In this way, related art FPC system 200 may at least partially back-up or supplement related art RHR system 300 and vice-versa.

During a plant emergency or other abnormal condition, normal plant electrical power may be disrupted and/or normal cooling of, for example, the spent fuel pool and/or the suppression pool may be impaired or prevented. Such plant emergencies might include, for example, a severe plant casualty, airplane crash, fire, flooding, earthquake, hurricane, tornado, tsunami, sabotage, and terrorist attack. Such abnormal conditions might include, for example, excessively high or low ambient air temperature, or combinations of temporary system realignment(s) due to maintenance, failure(s) of a component such as a circuit breaker, and/or operator error(s). Additionally, one or more plant emergencies may occur simultaneously with one or more abnormal conditions.

In particular, during plant emergencies or other abnormal conditions, a nuclear plant may be without normal electrical power to run related art FPC system 200 and/or related art RHR system 300.

Related art systems and methods are discussed, for example, in U.S. Patent No. 4,957,690 ("the '690 patent"), U.S. Patent No. 5,169,595 ("the '595 patent"), U.S. Patent No. 5,213,755 ("the '755 patent"), U.S. Patent No. 5,375,151 ("the '151 patent"), U.S. Patent No. 6,249,561 B1 ("the '561 patent"), and 6,928,132 B2 ("the '132 patent").

### SUMMARY

Example embodiments may provide heat transfer systems for nuclear plants. Example embodiments also may provide methods of transferring heat from nuclear plants.

In example embodiments, a heat transfer system for a nuclear plant may comprise a piping system that includes first and second connectors, a heat exchanger, a pump, and/or a power source. The heat transfer system may not be connected to the nuclear plant during normal plant power operations. The power source may be independent of a normal electrical power distribution system for the nuclear plant. The power source may be configured to power the pump. The piping system may be configured to connect the heat exchanger and pump. The first and second connectors may be configured to connect the heat transfer system to a fluid system of the nuclear plant. When the first and second connectors connect the heat transfer system to the fluid system of the nuclear plant, the heat transfer system may be configured to receive fluid from the fluid system of the nuclear plant via the first connector, to pump the fluid through the heat exchanger, and/or to return the fluid to the fluid system of the nuclear plant via the second connector. In example embodiments, the piping system, heat exchanger, pump, and power source may be portable.

In example embodiments, at least one of the piping system, heat exchanger, pump, and power source may be portable.

In example embodiments, the piping system may be portable.

In example embodiments, the heat exchanger may be portable.

In example embodiments, the pump may be portable.

In example embodiments, the power source may be portable.

In example embodiments, the power source may comprise an electrical generator.

In example embodiments, the electrical generator may be driven by a diesel engine.

In example embodiments, the electrical generator may be driven by a gasoline engine.

In example embodiments, the power source may comprise a battery.

In example embodiments, the power source may comprise an engine.

In example embodiments, the power source may comprise a diesel engine.

In example embodiments, the power source may comprise a gasoline engine.

In example embodiments, the piping system, heat exchanger, pump, and power source may be located or stored in a hardened enclosure separate from the nuclear plant.

In example embodiments, at least one of the piping system, heat exchanger, pump, and first power source may be located or stored in a hardened enclosure separate from the nuclear plant.

In example embodiments, the heat transfer system may further comprise a first jumper that includes third and/or fourth connectors, and/or a second jumper that includes fifth and/or sixth connectors. The third connector may be configured to be connected to the first connector. The fifth connector may be configured to be connected to the second connector.

In example embodiments, a method of transferring heat from a nuclear plant may comprise connecting a heat transfer system to the nuclear plant and/or using the heat transfer system to transfer heat from the nuclear plant. The heat transfer system may comprise a piping system that includes first and second connectors, a heat exchanger, a pump, and/or a power source. The heat transfer system may not be connected to the nuclear plant during normal plant power operations. The power source may be independent of a normal electrical power distribution system for the nuclear plant. The power source may be configured to power the pump. The piping system may be configured to connect the heat exchanger and pump. The first and second connectors may be configured to connect the heat transfer system to a fluid system of the nuclear plant. When the first and second connectors connect the heat transfer system to the fluid system of the nuclear plant, the heat transfer system may be configured to receive fluid from the fluid system of the nuclear plant via the first connector, to pump the fluid through the heat exchanger, and to return the fluid to the fluid system of the nuclear plant via the second connector.

In example embodiments, the heat transfer system may be connected to the nuclear plant via a residual heat removal system of the nuclear plant.

In example embodiments, the heat transfer system may be connected to the nuclear plant via a fuel pool cooling system of the nuclear plant.

In example embodiments, the heat transfer system may be connected to the nuclear plant via both a residual heat removal system of the nuclear plant and a fuel pool cooling system of the nuclear plant.

These and other features and advantages of this invention are described in, or are apparent from, the following detailed description of various example embodiments of the apparatuses and methods according to the invention.

### BRIEF DESCRIPTION OF THE DRAWINGS

The above and/or other aspects and advantages will become more apparent and more readily appreciated from the following detailed description of example embodiments, taken in conjunction with the accompanying drawings, in which:
FIG. 1 is a cut-away view of a related art BWR reactor building;
FIG. 2 is a simplified drawing of a related art FPC system;
FIG. 3 is a simplified drawing of a related art RHR system;
FIG. 4 is a diagram showing a heat transfer system according to example embodiments;
FIG. 5 is a simplified drawing of an FPC system configured to be connected to a heat transfer system according to example embodiments;
FIG. 6 is a simplified drawing of an RHR system configured to be connected to a heat transfer system according to example embodiments; and
FIG. 7 is a flowchart of a method of transferring heat from a nuclear plant according to example embodiments.

### DETAILED DESCRIPTION OF EXAMPLE EMBODIMENTS

Example embodiments will now be described more fully with reference to the accompanying drawings. Embodiments, however, may be embodied in many different forms and should not be construed as being limited to the embodiments set forth herein. Rather, these example embodiments are provided so that this disclosure will be thorough and complete, and will fully convey the scope to those skilled in the art. In the drawings, the thicknesses of layers and regions are exaggerated for clarity.

It will be understood that when an element is referred to as being "on," "connected to," "electrically connected to," or "coupled to" to another component, it may be directly on, connected to, electrically connected to, or coupled to the other component or intervening components may be present. In contrast, when a component is referred to as being "directly on," "directly connected to," "directly electrically connected to," or "directly coupled to" another component, there are no intervening components present. As used herein, the term "and/or" includes any and all combinations of one or more of the associated listed items.

It will be understood that although the terms first, second, third, etc., may be used herein to describe various elements, components, regions, layers, and/or sections, these elements, components, regions, layers, and/or sections should not be limited by these terms. These terms are only used to distinguish one element, component, region, layer, and/or section from another element, component, region, layer, and/or section. For example, a first element, component, region, layer, and/or section could be termed a second element, component, region, layer, and/or section without departing from the teachings of example embodiments.

Spatially relative terms, such as "beneath," "below," "lower," "above," "upper," and the like may be used herein for ease of description to describe the relationship of one component and/or feature to another component and/or feature, or other component(s) and/or feature(s), as illustrated in the drawings. It will be understood that the spatially relative terms are intended to encompass different orientations of the device in use or operation in addition to the orientation depicted in the figures.

The terminology used herein is for the purpose of describing particular example embodiments only and is not intended to be limiting of example embodiments. As used herein, the singular forms "a," "an," and "the" are intended to include the plural forms as well, unless the context clearly indicates otherwise. It will be further understood that the terms "comprises," "comprising," "includes," and/or "including," when used in this specification, specify the presence of stated features, integers, steps, operations, elements, and/or components, but do not preclude the presence or addition of one or more other features, integers, steps, operations, elements, components, and/or groups thereof.

Unless otherwise defined, all terms (including technical and scientific terms) used herein have the same meaning as commonly understood by one of ordinary skill in the art to which example embodiments belong. It will be further understood that terms, such as those defined in commonly used dictionaries, should be interpreted as having a meaning that is consistent with their meaning in the context of the relevant art and should not be interpreted in an idealized or overly formal sense unless expressly so defined herein.

It should also be noted that in some alternative implementations, functions, and/or acts noted may occur out of the order noted in the figures. For example, two figures shown in succession may in fact be executed substantially concurrently or may sometimes be executed in the reverse order, depending upon the functionality and/or acts involved.

Reference will now be made to example embodiments, which are illustrated in the accompanying drawings, wherein like reference numerals may refer to like components throughout.

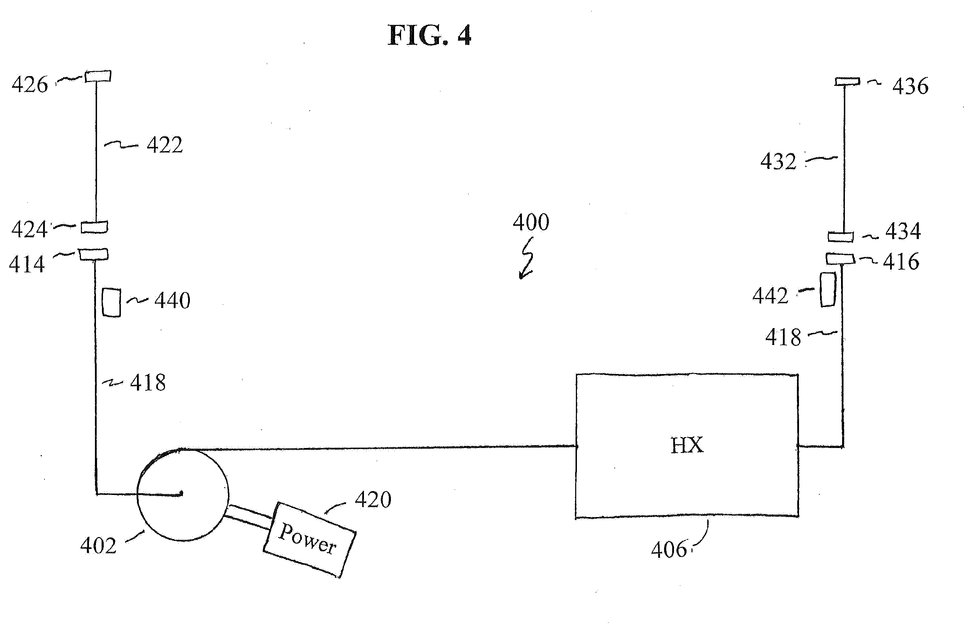

FIG. 4 is a diagram showing heat transfer system 400 according to example embodiments. Heat transfer system 400 may include, for example, one or more pumps 402, one or more heat exchangers 406, connectors 414 and 416, piping 418, and power source 420. One or more pumps 402 may be configured to move fluid from connector 414, through piping 418 to one or more heat exchangers 406, and then through piping 418 to connector 416. Power source 420 may provide power for one or more pumps 402.

Heat transfer system 400 may optionally include radiation monitor 440 and/or radiation monitor 442. During a plant emergency or other abnormal condition, radiation monitor 440 and/or radiation monitor 442 may provide important data regarding potential radiation and/or contamination hazards associated with the use of heat transfer system 400.

Heat transfer system 400 may optionally include one or more jumpers 422 and 432. Jumper 422 may include connectors 424 and 426. Jumper 432 may include connectors 434 and 436. Jumper 422 may be connected to piping 418 via connectors 424 and 414. Jumper 432 may be connected to piping 418 via connectors 434 and 416.

One or more pumps 402 may be powered by power source 420, for example, electrically or by direct drive.

Power source 420 may be, for example, an alternating current ("AC") source and/or a direct current ("DC") source. Power source 420 may be, for example, one or more batteries or other energy storage devices. Although the size and/or weight of batteries and other energy storage devices may limit or prevent their portability, they retain potential for serving as power source 420.

Power source 420 may be, for example, one or more solar panels, wind turbines, or other generating devices for electrical energy. Power source 420 may be, for example, one or more electrical generators, such as a diesel generator or a gasoline-powered generator. Such electrical generators may generate, for example, AC or DC power.

Power source 420 may be, for example, one or more engines, such as a diesel engine, a gasoline-powered engine, gas turbine, or an engine powered by some other chemical element or compound such as hydrogen, oxygen, or hydrogen peroxide. Such a diesel engine may use diesel fuel or other fuels that meet minimum requirements for the engine. Similarly, such a gasoline-powered engine may use gasoline or other fuels that meet minimum requirements for the engine. Diesel and/or gasoline fuel may be stored, for example, in permanent, temporary, or portable tanks or trucks. Diesel and/or gasoline fuel also may be purchased from local and/or regional sellers. Additionally, diesel and/or gasoline fuel may be scavenged, for example, from locally available cars, trucks, and other vehicles.

The ultimate heat sink for one or more heat exchangers 406 may be the environment (e.g., the atmosphere or the local water supply, such as a lake, river, or ocean). Water from the local water supply, for example, could be pumped to one or more heat exchangers 406 via fire hoses or the like. If the total heat load is sufficiently low, industrial chillers (e.g., air conditioning units) and/or direct water-to-air heat exchangers might be used. Suitable arrangements for the ultimate heat sink would be known to a PHOSITA.

Heat transfer system 400 may be independent from the nuclear plant. That is, one or more portions of heat transfer system 400 may be functional independent of the nuclear plant. Power source 420, for example, may be independent of a normal electrical power distribution system of the nuclear plant. One or more pumps 402, for example, may be powered independently from the normal electrical power distribution system of the nuclear plant. One or more heat exchangers 406, for example, may exchange heat with a heat sink independent of a heat sink or sinks used by the nuclear plant. During a plant emergency or other abnormal condition, such independence may help protect heat transfer system 400 so that it can properly function to help mitigate or alleviate the plant emergency or other abnormal condition.

Heat transfer system 400 may be hardened. That is, one or more portions of heat transfer system 400 may be located or stored in a hardened enclosure separate from the nuclear plant. The hardened enclosure may be resistant to environmental and other problems, such as a severe plant casualty, airplane crash, fire, flooding, earthquake, hurricane, tornado, tsunami, sabotage, and terrorist attack. During a plant emergency or other abnormal condition, such hardening may help protect heat transfer system 400 so that it can properly function to help mitigate or alleviate the plant emergency or other abnormal condition.

Heat transfer system 400 may be located or stored away from the nuclear plant. That is, one or more portions of heat transfer system 400 may be located or stored away from the nuclear plant. This location or storage may allow one or more portions of heat transfer system 400 to be operated remotely during a plant emergency or other abnormal condition, potentially reducing risks such as radiation exposure to personnel. Heat transfer system 400 may be portable. That is, one or more portions of heat transfer system 400 may be movable, for example, on a skid or other structural support. Such a skid or other structural support could be moved by vehicle (e.g., truck), aircraft (e.g., helicopter), watercraft (e.g., barge), or other means of transport. During a plant emergency or other abnormal condition, such portability may help bring heat transfer system 400 to bear on the problem so that it can properly function to help mitigate or alleviate the plant emergency or other abnormal condition.

As discussed above, one or more portions of heat transfer system 400 may be located or stored in a hardened enclosure away from the nuclear plant. For example, one or more pumps 402, one or more heat exchangers 406, connectors 414 and 416, piping 418, and/or power source 420 may be located or stored in the hardened enclosure. One or more portions of heat transfer system 400 may be permanently installed, for example, in the hardened enclosure. In such an installation, piping 418 may extend or may be extended from the hardened enclosure to or near to the nuclear plant. In the alternative, jumper 422 and/or jumper 432 may extend or may be extended from the hardened enclosure to or near to the nuclear plant.

As discussed above, one or more portions of heat transfer system 400 may be movable, for example, on a skid or other structural support. For use, the one or more portions of heat transfer system 400 may be transported to or near to the nuclear plant. Connector 414 and/or 416 may connect heat transfer system 400 to the nuclear plant. In the alternative, jumper 422 and/or jumper 432 may connect heat transfer system 400 to the nuclear plant.

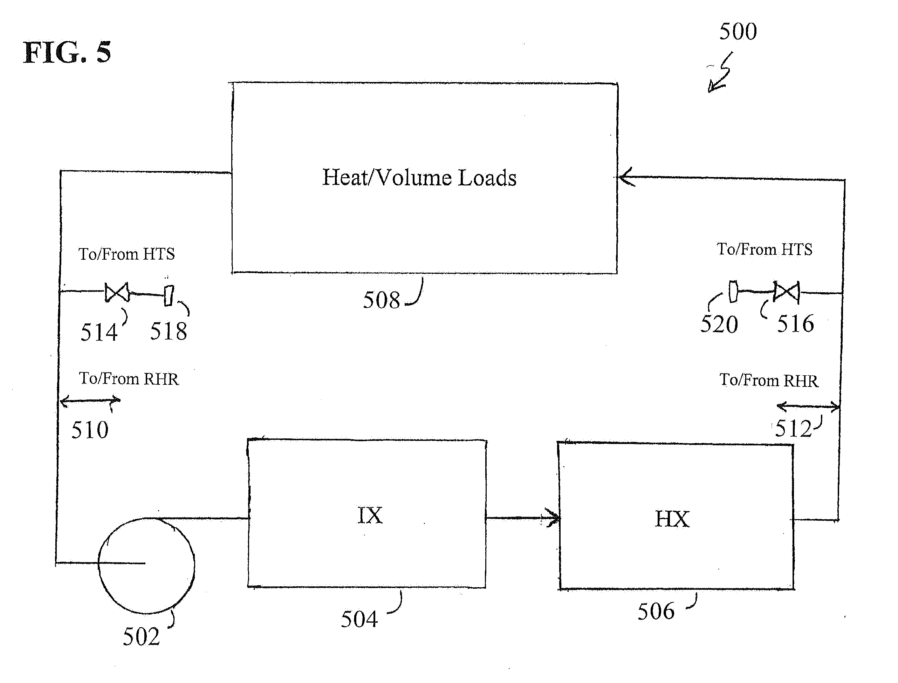

FIG. 5 is a simplified drawing of FPC system 500 configured to be connected to heat transfer system 400 according to example embodiments. FPC system 500 may include, for example, one or more FPC pumps 502, one or more FPC demineralizers/ion exchangers 504, one or more FPC heat exchangers 506, and/or one or more FPC heat/volume loads 508. FPC heat/volume loads 508 may include, for example, one or more of a spent fuel pool (not shown), a wet well (not shown), a dryer-separator pool, and a suppression pool (not shown). Some of FPC heat/volume loads 508 may involve cooling by FPC system 500, some of FPC heat/volume loads 508 may involve movement of volumes of water by FPC system 500, and some of FPC heat/volume loads 508 may involve both.

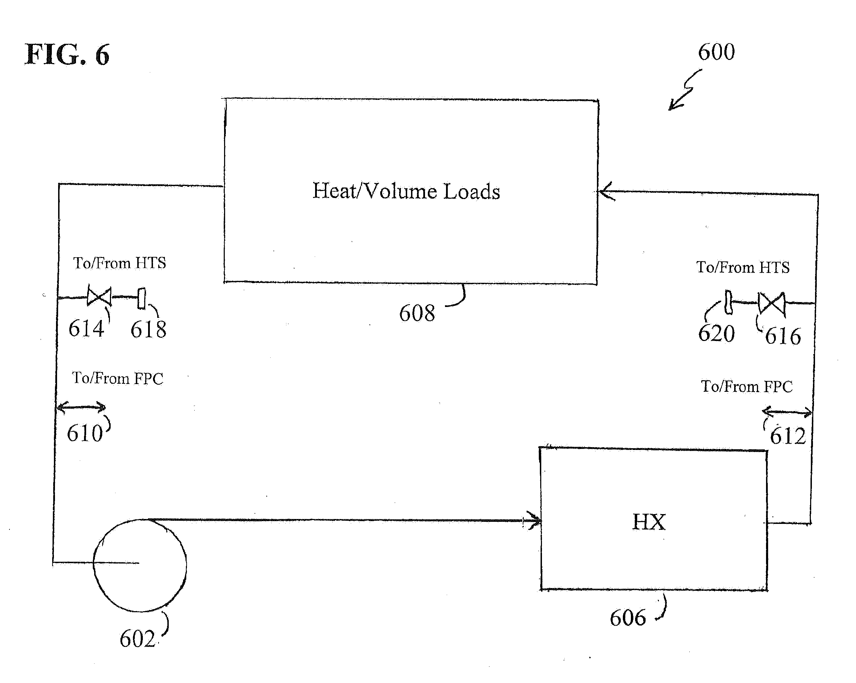

FIG. 6 is a simplified drawing of RHR system 600 configured to be connected to heat transfer system 400 according to example embodiments. RHR system 600 may include, for example, one or more RHR pumps 602, one or more RHR heat exchangers 606, and/or one or more RHR heat/volume loads 608. RHR heat/volume loads 608 may include, for example, one or more of a reactor pressure vessel (not shown), a wet well (not shown), a dry well (not shown), a suppression pool (not shown), and a spent fuel pool (not shown). Some of RHR heat/volume loads 608 may involve cooling by RHR system 600, some of RHR heat/volume loads 608 may involve movement of volumes of water by RHR system 600, and some of RHR heat/volume loads 608 may involve both.

FPC system 500 may include one or more cross-connections to and/or from RHR system 600. As shown in FIG. 5, FPC system 500 may include, for example, first cross-connector 510 and/or second cross-connector 512. As shown in FIG. 6, RHR system 600 may include, for example, third cross-connector 610 and/or fourth cross-connector 612. In this way, FPC system 500 may at least partially backup and/or supplement RHR system 600 and vice versa.

Heat transfer system 400 may be configured to be connected to FPC system 500 and/or RHR system 600. As shown in FIG. 5, FPC system 500 may include, for example, first optional isolation valve 514, second optional isolation valve 516, fifth cross-connector 518, and/or sixth cross-connector 520. Fifth cross-connector 518 and/or sixth cross-connector 520 may be provided with blank flanges (not shown). As shown in FIG. 6, RHR system 600 may include, for example, third optional isolation valve 614, fourth optional isolation valve 616, seventh cross-connector 618, and/or eighth cross-connector 620. Seventh cross-connector 618 and/or eighth cross-connector 620 may be provided with blank flanges (not shown).

Connection of heat transfer system 400 to FPC system 500 and/or RHR system 600 may be effected, for example, by bolting connector 414 or connector 426 to fifth cross-connector 518. An optional gasket (not shown) may assist in maintaining a fluid- and pressure-tight boundary at such a connection. Connection of heat transfer system 400 to FPC system 500 and/or RHR system 600 by such bolted connections and other similar connections would be known to a PHOSITA.

Repositioning of first optional isolation valve 514, second optional isolation valve 516, third optional isolation valve 614, and/or fourth optional isolation valve 616 may be effected, for example, mechanically (e.g., through a mechanical linkage) or electrically (e.g., using a junction box, local disconnects and/or transfer switches, and/or control switches to divorce the appropriate valve electrical supply and control from the normal plant electrical power distribution system). Such mechanical and electrical arrangements would be known to a PHOSITA.

Heat transfer system 400 may be configured to be connected to FPC system 500 via fifth cross-connector 518 and/or sixth cross-connector 520. For example, heat transfer system 400 may be connected to FPC system 500 via fifth cross-connector 518 and connector 414, and/or heat transfer system 400 may be connected to FPC system 500 via sixth cross-connector 520, connector 436, jumper 432, connector 434, and connector 416.

Heat transfer system 400 may be configured to be connected to RHR system 600 via seventh cross-connector 618 and/or eighth cross-connector 620. For example, heat transfer system 400 may be connected to RHR system 600 via seventh cross-connector 618, connector 426, jumper 422, connector 424, and connector 414, and/or heat transfer system 400 may be connected to RHR system 600 via eighth cross-connector 620 and connector 416.

Depending on design of the nuclear plant, heat transfer system 400, FPC system 500, and/or RHR system 600, it may be advantageous for the connection(s) from heat transfer system 400 to FPC system 500 to be separate from the connection(s) from heat transfer system 400 to RHR system 600, as shown in FIGs. 5 and 6. In the alternative, it may be advantageous for the connection(s) from heat transfer system 400 to FPC system 500 to be shared with the connection(s) from heat transfer system 400 to RHR system 600. In such a case, for example, one cross-connector may replace both fifth cross-connector 518 and seventh cross-connector 618 and/or another cross-connector may replace both sixth cross-connector 520 and eighth cross-connector 620. Suitable arrangements of piping, isolation valves, and the like would be known to a PHOSITA.

Depending on design of the nuclear plant, heat transfer system 400, FPC system 500, and/or RHR system 600, if FPC system 500 remains operational during a plant emergency or other abnormal condition, heat transfer system 400 may be used to supplement the cooling and/or fluid movement capabilities of FPC system 500. Similarly, if RHR system 600 remains operational during a plant emergency or other abnormal condition, heat transfer system 400 may be used to supplement the cooling and/or fluid movement capabilities of RHR system 600. Additionally, if both FPC system 500 and RHR system 600 remain operational during a plant emergency or other abnormal condition, heat transfer system 400 may be used to supplement the cooling and/or fluid movement capabilities of FPC system 500 and RHR system 600.

Depending on design of the nuclear plant, heat transfer system 400, FPC system 500, and/or RHR system 600, heat transfer system 400 may be used to supplement the cooling and/or fluid movement capabilities of FPC system 500 and/or RHR system 600 at times other than a plant emergency or other abnormal condition.

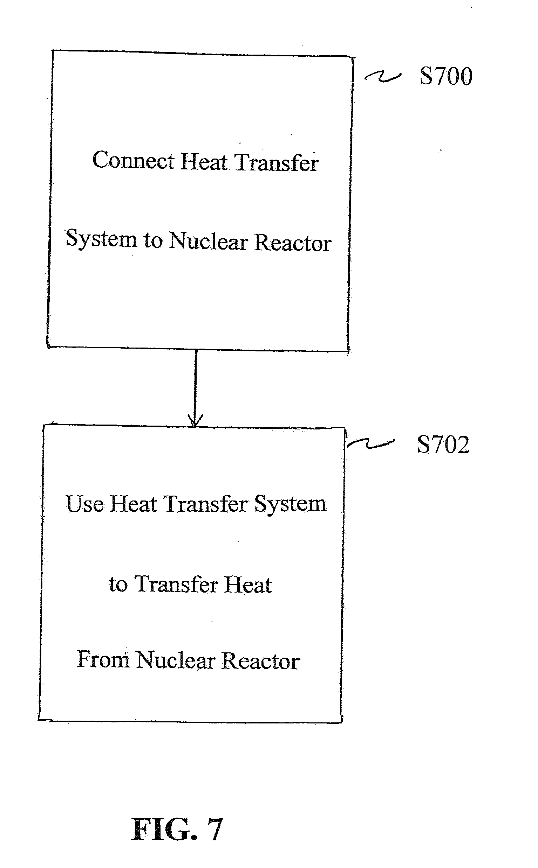

FIG. 7 is a flowchart of a method of transferring heat from a nuclear plant according to example embodiments. As shown in S700 of FIG. 7, heat transfer system 400 may be connected to the nuclear plant. Heat transfer system 400 may be connected, for example, to FPC system 500, RHR system 600, or both FPC system 500 and RHR system 600. The connections may involve moving one or more portions of heat transfer system 400 to enable its proper operation. For example, jumper 422 and/or jumper 432 may have to be installed between heat transfer system 400 and one or both of FPC system 500 and RHR system 600. In another example, power source 420 might have to be moved to a more open location to ensure a sufficient supply of air for an associated engine and/or for purposes of fueling and testing prior to use. In yet another example, electrical cables might need to be hooked up between power source 420 and one or more pumps 402.

As shown in S702 of FIG. 7, heat transfer system 400 may be used to transfer heat from the nuclear plant. One or more pumps 402 may move fluid from FPC system 500 and/or RHR system 600 via connector 414, through piping 418 to one or more heat exchangers 406, and then through piping 418 to connector 416 to FPC system 500 and/or RHR system 600. Heat of the fluid may be transferred to a heat sink in one or more heat exchangers 406.

While example embodiments have been particularly shown and described, it will be understood by those of ordinary skill in the art that various changes in form and details may be made therein without departing from the scope of the present invention as defined by the claims.

Various aspects and embodiments of the present invention are defined by the following numbered clauses:
1. A heat transfer system for a nuclear plant, comprising:
   a piping system that includes first and second connectors;
   a heat exchanger;
   a pump; and
   a power source;
   wherein the heat transfer system is not connected to the nuclear plant during normal plant power operations,
   wherein the power source is independent of a normal electrical power distribution system for the nuclear plant,
   wherein the power source is configured to power the pump,
   wherein the piping system is configured to connect the heat exchanger and pump,
   wherein the first and second connectors are configured to connect the heat transfer system to a fluid system of the nuclear plant, and
   wherein when the first and second connectors connect the heat transfer system to the fluid system of the nuclear plant, the heat transfer system is configured to receive fluid from the fluid system of the nuclear plant via the first connector, to pump the fluid through the heat exchanger, and to return the fluid to the fluid system of the nuclear plant via the second connector.
2. The heat transfer system of clause 1, wherein the piping system, heat exchanger, pump, and power source are portable.
3. The heat transfer system of any preceding clause, wherein at least one of the piping system, heat exchanger, pump, and power source is portable.
4. The heat transfer system of any preceding clause, wherein the piping system is portable.
5. The heat transfer system of any preceding clause, wherein the heat exchanger is portable.
6. The heat transfer system of any preceding clause, wherein the pump is portable.
7. The heat transfer system of any preceding clause, wherein the power source is portable.
8. The heat transfer system of any preceding clause, wherein the power source comprises an electrical generator.
9. The heat transfer system of any preceding clause, wherein the electrical generator is driven by a diesel engine.
10. The heat transfer system of any preceding clause, wherein the electrical generator is driven by a gasoline engine.
11. The heat transfer system of any preceding clause, wherein the power source comprises a battery.
12. The heat transfer system of any preceding clause, wherein the power source comprises an engine.
13. The heat transfer system of any preceding clause, wherein the power source comprises a diesel engine.
14. The heat transfer system of any preceding clause, wherein the power source comprises a gasoline engine.
15. The heat transfer system of any preceding clause, wherein the piping system, heat exchanger, pump, and power source are located or stored in a hardened enclosure separate from the nuclear plant.
16. The heat transfer system of any preceding clause, wherein at least one of the piping system, heat exchanger, pump, and first power source is located or stored in a hardened enclosure separate from the nuclear plant.
17. The heat transfer system of any preceding clause, further comprising:
   a first jumper that includes third and fourth connectors; and
   a second jumper that includes fifth and sixth connectors;
   wherein the third connector is configured to be connected to the first connector, and
   wherein the fifth connector is configured to be connected to the second connector.
18. A method of transferring heat from a nuclear plant, the method comprising:
   connecting a heat transfer system to the nuclear plant; and
   using the heat transfer system to transfer heat from the nuclear plant;
   wherein the heat transfer system comprises:
      a piping system that includes first and second connectors;
      a heat exchanger;
      a pump; and
      a power source;
      wherein the heat transfer system is not connected to the nuclear plant during normal plant power operations,
      wherein the power source is independent of a normal electrical power distribution system for the nuclear plant,
      wherein the power source is configured to power the pump,
      wherein the piping system is configured to connect the heat exchanger and pump,
      wherein the first and second connectors are configured to connect the heat transfer system to a fluid system of the nuclear plant, and
      wherein when the first and second connectors connect the heat transfer system to the fluid system of the nuclear plant, the heat transfer system is configured to receive fluid from the fluid system of the nuclear plant via the first connector, to pump the fluid through the heat exchanger, and to return the fluid to the fluid system of the nuclear plant via the second connector.
19. The method of any preceding clause, wherein the heat transfer system is connected to the nuclear plant via a residual heat removal system of the nuclear plant.
20. The method of any preceding clause, wherein the heat transfer system is connected to the nuclear plant via a fuel pool cooling system of the nuclear plant.
21. The method of any preceding clause, wherein the heat transfer system is connected to the nuclear plant via both a residual heat removal system of the nuclear plant and a fuel pool cooling system of the nuclear plant.

## Claims

1. A heat transfer system (400) for a nuclear plant, comprising:
a piping system (418) that includes first and second connectors (414, 416);
a heat exchanger (406);
a pump (402); and
a power source (420);
wherein the heat transfer system (400) is not connected to the nuclear plant during normal plant power operations,
wherein the power source (420) is independent of a normal electrical power distribution system for the nuclear plant,
wherein the power source (420) is configured to power the pump (402),
wherein the piping system (418) is configured to connect the heat exchanger (406) and pump (402),
wherein the first and second connectors (414, 416) are configured to connect the heat transfer system (400) to a fluid system (500, 600) of the nuclear plant, and
wherein when the first and second connectors (414, 416) connect the heat transfer system (400) to the fluid system (500, 600) of the nuclear plant, the heat transfer system (400) is configured to receive fluid from the fluid system (500, 600) of the nuclear plant via the first connector (414), to pump the fluid through the heat exchanger (406), and to return the fluid to the fluid system (500, 600) of the nuclear plant via the second connector (416).

2. The heat transfer system (400) of claim 1, wherein at least one of the piping system (418), heat exchanger (406), pump (402), and power source (420) is portable.

3. The heat transfer system (400) of either of claim 1 or2, wherein the power source (420) comprises an electrical generator.

4. The heat transfer system (400) of any of the preceding claims, wherein the power source (420) comprises a battery.

5. The heat transfer system (400) of any of the preceding claims, wherein the power source (420) comprises an engine.

6. The heat transfer system (400) of any of the preceding claims, wherein the power source (420) comprises a diesel engine.

7. The heat transfer system (400) of any of the preceding claims, wherein the power source (420) comprises a gasoline engine.

8. The heat transfer system (400) of any of the preceding claims, wherein at least one of the piping system (418), heat exchanger (406), pump (402), and power source (420) is located or stored in a hardened enclosure separate from the nuclear plant.

9. The heat transfer system (400) of any of the preceding claims, further comprising:
a first jumper (422) that includes third and fourth connectors (424, 426); and
a second jumper (432) that includes fifth and sixth connectors (434, 436);
wherein the third connector (424) is configured to be connected to the first connector (414), and
wherein the fifth connector (434) is configured to be connected to the second connector (416).

10. A method of transferring heat from a nuclear plant, the method comprising:
connecting a heat transfer system (400) to the nuclear plant; and
using the heat transfer system to transfer heat from the nuclear plant;
wherein the heat transfer system (400) comprises:
a piping system (418) that includes first and second connectors (414,416);
a heat exchanger (406);
a pump (402); and
a power source(420);
wherein the heat transfer system (400) is not connected to the nuclear plant during normal plant power operations,
wherein the power source (420) is independent of a normal electrical power distribution system for the nuclear plant,
wherein the power source (420) is configured to power the pump (402),
wherein the piping system (418) is configured to connect the heat exchanger (406) and pump (402),
wherein the first and second connectors (414,416) are configured to connect the heat transfer system to a fluid system (500,600) of the nuclear plant, and
wherein when the first and second connectors (414,416) connect the heat transfer system to the fluid system (500,600) of the nuclear plant, the heat transfer system (400) is configured to receive fluid from the fluid system of the nuclear plant via the first connector (414), to pump the fluid through the heat exchanger, and to return the fluid to the fluid system of the nuclear plant via the second connector (416).

11. The method of claim 10, wherein the heat transfer system (400) is connected to the nuclear plant via a residual heat removal system of the nuclear plant.

12. The method of either of claim 10 or 11, wherein the heat transfer system (400) is connected to the nuclear plant via a fuel pool cooling system of the nuclear plant.

13. The method of claim 10, wherein the heat transfer system (400) is connected to the nuclear plant via both a residual heat removal system of the nuclear plant and a fuel pool cooling system of the nuclear plant.
